# EUROPEAN PATENT APPLICATION

(11) **EP 0 848 148 A2**
(43) Date of publication of application: **17.06.1998**
(21) Application number: 97830649.6
(22) Date of filing: 05.12.1997
(51) Int. Cl.: F02B 31/08, F02B 17/00

(54) **Feed system for the air-fuel mixture formation and inlet into the combustion chamber of aspirated or supercharged, internal-combustion Otto engines with a 5 - valve head per cylinder**

(30) Priority: 06.12.1996 IT RM960838
(71) Applicant: Caruso, Luciano, 41100 Modena (IT)
(72) Inventor: Caruso, Luciano, 41100 Modena (IT)
(74) Representative: Sarpi, Maurizio

(57) **Abstract**

A feed system for the air-fuel mixture formation and inlet into the combustion chamber of aspirated or supercharged, internal-combustion Otto engines with a 5-valve head per cylinder, characterized by a single-spray electroinjector (1) having such a spray angle and such a direction as to hit only the intake duct of the central intake valve (V_{asp.C}), a timing of the central intake valve (V_{asp.C}) delayed with respect to the lateral intake valves (V_{asp.S}, V_{asp.D}), and an overlap angle between the openings of the intake valves and the exhaust valves (V_{scar.}) which is large in the lateral intake valves (V_{asp.S}, V_{asp.D}) and small or null in the central intake valve (V_{asp.C}).

## Description

The present invention relates to a new feed system for the air-fuel mixture formation and inlet into the combustion chamber of aspirated or supercharged, internal-combustion Otto engines with a 5-valve head per cylinder (3 intake valves, 2 exhaust valves).

Otto engines with five valves per cylinder are currently employed in vehicles and motorbikes wherein the air-fuel mixture is traditionally formed by one injector per cylinder which injects the fuel into the ducts of the three intake valves controlled by a camshaft having the same lift and timing.
The combustion chamber of this engine type is characterized by the closeness of the lateral intake and exhaust valves. This implies the loss of a considerable part of the air-fuel mixture mainly coming from the two lateral intake valves during the overlap step (concurrent opening of intake and exhaust valves) and flowing directly into the exhaust ducts of the exhaust valves adjacent to the intake valves, thus missing the combustion chamber and without taking part to the combustion process.
As a result, although an engine having a 5-valve head per cylinder leads to higher torque and power performances than a 4-valve engine with the same displacement, however, the geometry of the combustion chamber illustrated above leads to higher consumption and pollution.
To solve this problem there is provided a camshaft timing with very small overlap angles between the intake and the exhaust valves so as to avoid the mixture outflow directly into the exhaust system.
However, the result of reducing the overlap angles which does not allow the consistent exploitation of the air-fuel fluid column inertia for the proper filling of the combustion chamber, is a considerable decrease of the engine performance.

The present invention seeks to overcome all of the above-mentioned drawbacks and limits and indicates the best way to use an engine having five valves per cylinder so as to provide the highest performance with the same engine displacement but a lower fuel consumption and reduced pollutant emissions.
A first object of the invention is to provide a feed system for the air-fuel mixture formation and inlet so as to reduce the pollutant emissions all over the engine operating range.
A second object of the present invention is to provide a feed system which reduces the fuel consumption with respect to the current engines with the same performances.
A third object of the invention is to provide a feed system which allows the engine performance to be increased.

The inventive concept of the present invention is on one hand to improve the performances by increasing the volumetric efficiency and filling the combustion chamber with as much air as possible under all of the engine operating conditions and through an improved use of the aerodynamic inertia of the fluid column forced into the combustion chamber by the depression generated by the piston, and on the other hand to reduce the consumption and the pollutant emissions by letting the fuel into the combustion chamber only through the central intake valve when the exhaust valves are closed in order to reduce the outflow of the unburnt fuel to the exhaust system.
This can be achieved by employing a single-spray electroinjector having a suitably reduced spray cone angle so as to inject the fuel only into the duct of the central intake valve and by using a camshaft with a cam controlling the central intake valve which is suitably delayed with respect to the lateral cams.

A better understanding of the invention will ensue from the following detailed description with reference to the accompanying drawings which show only by way of example a preferred embodiment thereof.
In the drawings:
Fig. 1 is the layout of a traditional feed system;
Fig. 2 is a view of the internal side of a combustion chamber with five valves per cylinder;
Figs. 3 and 4 show schematically front and side views of the arrangement of the injector and the spray according to the invention;
Fig. 5 is the valve timing diagram according to a preferred embodiment of the invention;
Fig. 6 shows torque and power curves of the same engine fed by the traditional feed system and by the feed system according to the invention; and
Fig. 7 is a valve timing diagram of a conventional feed system.

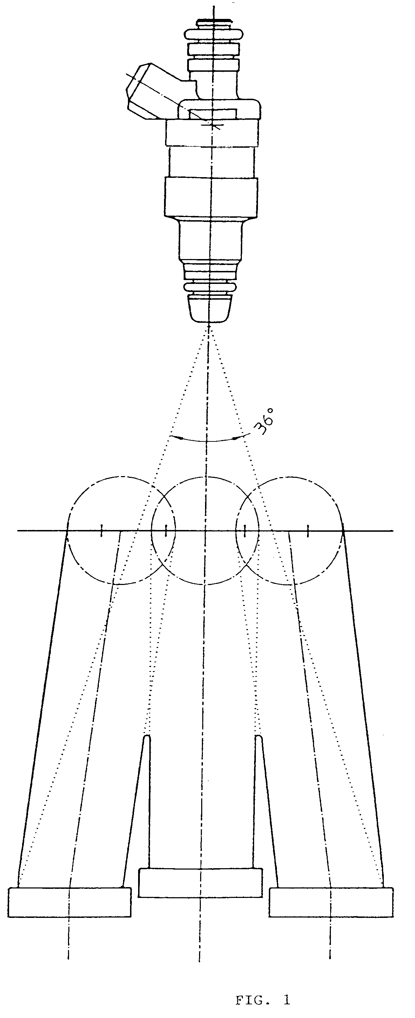

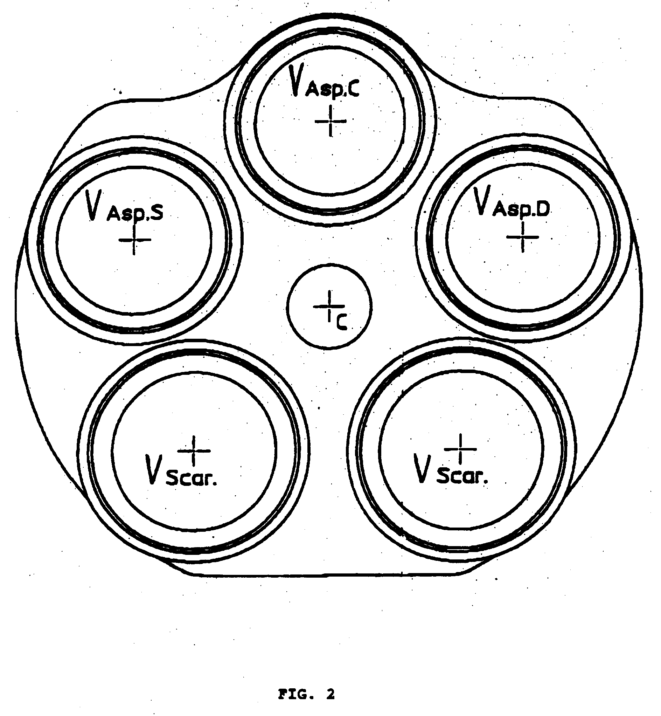

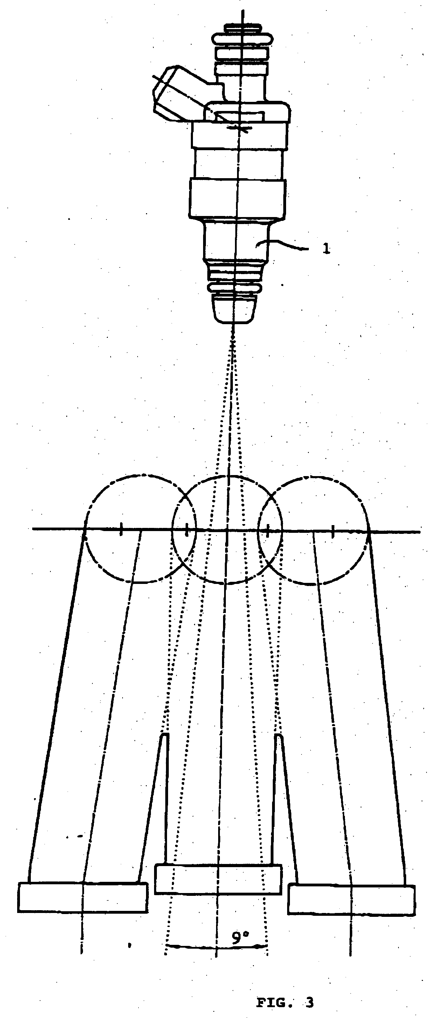

In the preferred embodiment described herein an aspirated or supercharged internal-combustion Otto engine having a 5-valve head for cylinder is provided. Referring particularly to Fig. 2, three intake valves V_{asp.S}, V_{asp.C}, V_{asp.D} and two exhaust valves V_{scar.} are provided.
As mentioned above, in such a so far known engine type that arrangement leads to the loss of a considerable part of the air-fuel mixture coming out directly of the exhaust valves without taking part to the combustion during the intake and exhaust valve overlap. This problem of the known state of art is mainly due to the fact that the fuel enters the three intake ducts. Typical injectors (Fig. 1) have been designed to have a spray pattern which propagates like a cone with an angle of about 36° so as to enter all of the three intake valve ducts.
According to the invention the above-mentioned problems are limited and/or overcome by filling the combustion chamber in different ways and times with respect to the traditional engines.
More specifically, the lateral intake valves V_{asp.S}, V_{asp.D} let in only air while the central intake valve V_{asp.C} lets in the whole air-fuel mixture into the combustion chamber.
This is achieved according to an embodiment of the invention by using in combination:
- a special electroinjector 1 (Fig. 3) having a spray angle of only 9° and being directed so as to inject the fuel only into the duct of the central intake valve V_{asp.C};
- lateral intake valves V_{asp.S}, V_{asp.D} which open in advance with respect to the central valve V_{asp.C}; and
- a large overlap of the lateral intake valves and a small overlap of the central intake valve.
   Said timing angles are strongly anticipated in the lateral intake valves V_{asp.S}, V_{asp.D} and consistently delayed in the central intake valve V_{asp.C}. Thus, the time interval during which the two exhaust valves V_{scar.} and the central intake valve V_{asp.C} are open is null or very small.
   A first advantage provided by such a new solution is the strong reduction of the pollutant emissions in the whole engine operating range.

A second advantage is the higher oxidation of the unburnt gases inside the catalyst owing to the oxygen entering directly into the exhaust duct because of the large overlap between the openings of the lateral intake valves V_{asp.S}, V_{asp.D} and the exhaust valve V_{scar.}.
It should be appreciated that according to the invention the proper use of the aerodynamic inertia of the fluid column which is taken in by large opening advance angles of the lateral intake valves V_{asp.S}, V_{asp.D} and a particular closing delay of the central intake valve V_{asp.C} allows the combustion chamber to be filled up as much as possible and the volumetric efficiency and then the engine performances to be increased in terms of maximum power and torque.

A peculiar characteristic of the invention is to provide close to the spark plug C (Fig. 2) a very rich air-fuel mixture coming only from the central intake valve V_{asp.C}. This stratified charge formation wherein mixture is rich near the spark plug and lean in the remainder of the combustion chamber affords two further important advantages:
- an optimum ignition time of the air-fuel mixture around the spark plug C with the result of a spark advance reduction;
- a proper ignition of the lean mixture in the remainder of the combustion chamber due to the higher speed of the flame front of the rich mixture.
   Moreover, the considerable decrease of the fuel accumulation between piston neck and first piston ring leads advantageously to the reduction of unburnt gases, consumption, pollutant emissions as well as knocking.
   From the foregoing it is self evident that it is possible to provide by the present invention an engine with five valves per cylinder and with the same displacement which is capable to ensure the best performances associated with lower consumption and reduced pollutant emissions.
   It should be noted that such results can be achieved without the application of a variable timing distribution in order to reduce the pollutant emissions and without the need to install a secondary air pump for reducing the initial time necessary for the catalyst to the cold cranking phase.
   With regard to this it should be appreciated that there is no reduction of pollutant emissions with a variable distribution when the valve timings return to typical values in order to increase the performances.
   The feed system according to the invention, however, allows the pollutant emissions to be reduced in the whole engine operating range.
   The test results obtained on the dynamometric bench and on a car are listed herebelow in order to illustrate the advantages of the system of the invention with respect to a standard feed system.

### Test of a motor on a dynamometric bench

The tests were performed on a supercharged internal-combustion engine having the following characteristics:
1. 4-stroke Otto engine
2. 12 60° V-cylinders
3. 80x63 mm cylinder bore
4. 3798 cm³ total displacement
5. compression ratio 7.8:1
6. combustion chamber with three intake and two exhaust valves
7. two turbosuperchargers
8. electronic multipoint injection with standard electroinjectors with 36° spray
9. capacitive discharge ignition with a coil per cylinder

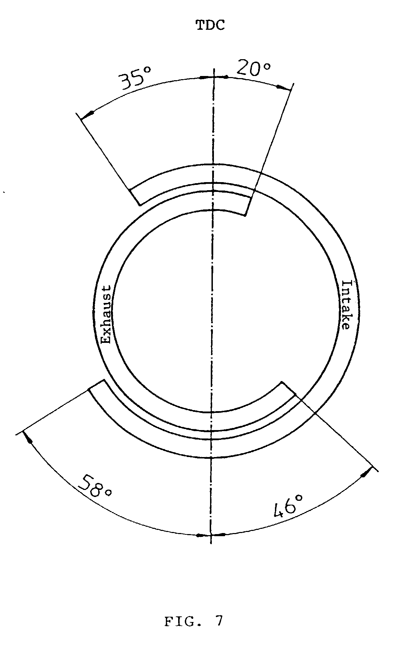

The test was started by using standard intake and exhaust camshafts (Fig. 7) with the following characteristics:
1. maximum theoretical valve lift of 7.90 mm both for intake and exhaust valves
2. intake stroke 35°-38° with 0.40 mm backlash, lift H=1.5 mm at TDC (Top Dead Centre)
3. exhaust stroke 46°-20° with 0.55 mm backlash, lift H=1.3 mm at TDC
4. Overlap angle 55°.

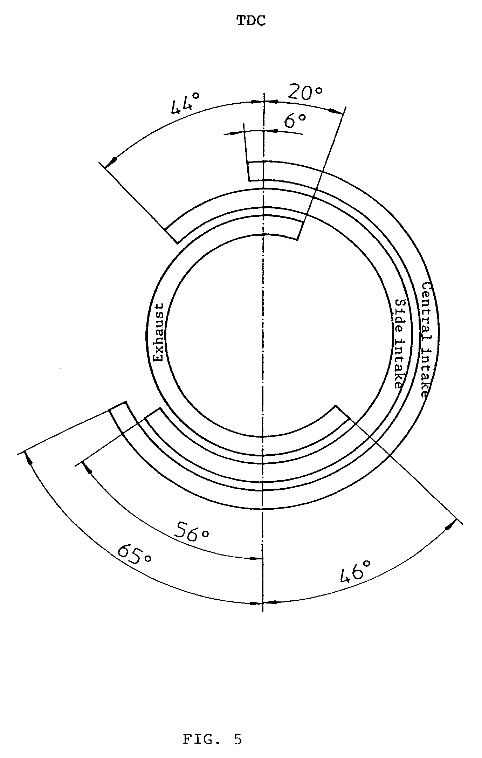

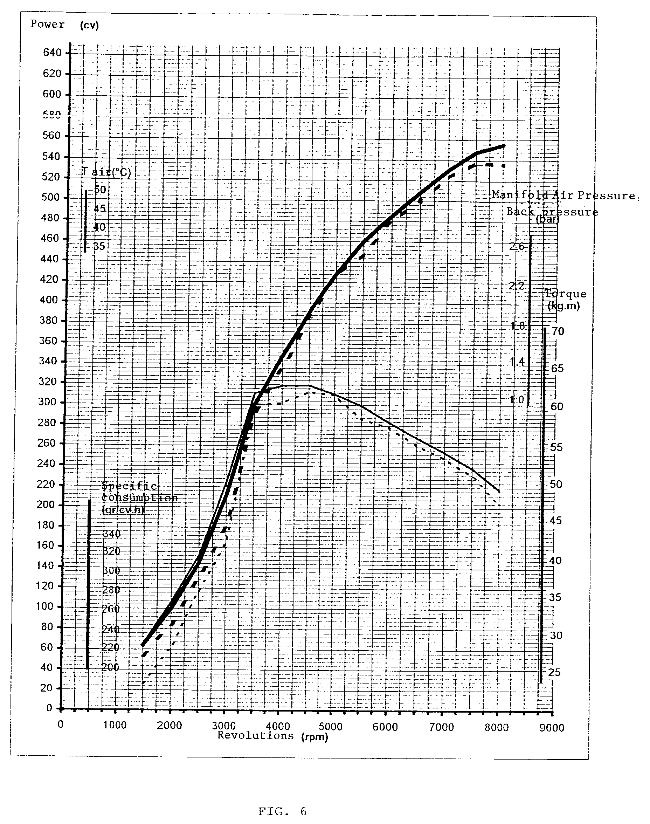

The performances in terms of power on the dynamometric bench are depicted in the diagram of Fig. 6 (dashed lines)
Different types of camshafts with different phase angles of the central cam with respect to the lateral cams were tested. The best solution was a phase angle of the central cam delayed by 12°, i.e. 24 crankshafts degrees (Fig. 5), as illustrated herebelow:

### 1. lateral intake:

44°÷56° phase angle 0.35 mm backlash H=2.0 mm at TDC

### 2. central intake:

6°÷65° phase angle 0.50 mm backlash H=0.10 mm at TDC

### 3. exhaust:

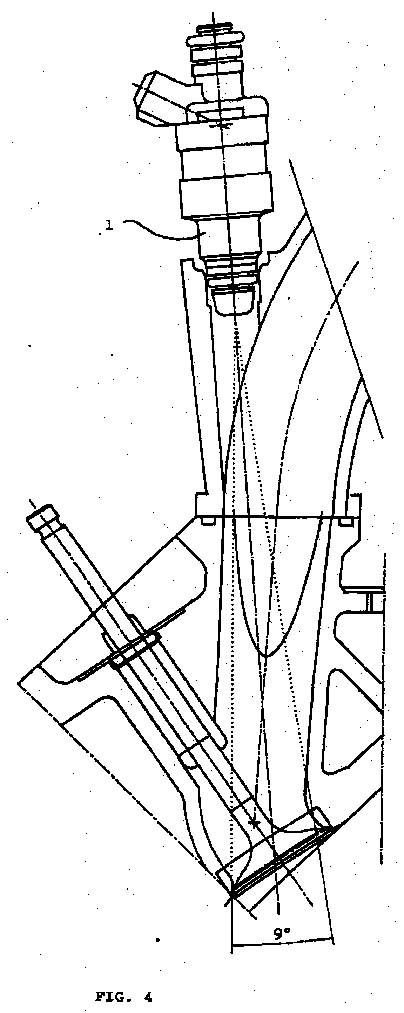

46°÷20° phase angle 0.55 mm backlash H=1.30 mm at TDC The phase angle of the central valve cam of 24 crankshaft degrees and the backlash increased from 0.35 to 0.50 mm led to the following overlap angles:
a) lateral intake/exhaust valves: 64°
b) central intake/exhaust valves: 26°
c) overlap angle reduction: 64° - 26° = 38° The engine was then mounted by using such an optimal solution of the camshaft arrangement according to the invention and with electroinjectors having a spray cone angle reduced to 9° and directed so as to inject the fuel only into the duct of the central intake valves of each cylinder (Figs. 3 and 4).
   Fig. 6 shows the performances of the system according to the invention compared with those according to the state of art with the following results:
   i) increase of the performance by 10-25 HP in the range from 2000 to 3500 rpm due to the increase of the lateral intake valve opening advance from 35° (Fig. 7) to 44° (Fig. 5);
   ii) increase of the performance by 8-20 HP in the range from 6500 to 8000 rpm due to the longer closing delay of the central intake valve (Figs. 5 and 6). The extremely small lift (0.1 mm) of the central intake valve at the top dead centre during the overlap led to positive results in terms of pollutant emissions.

Table 1 shows the values of unburnt hydrocarbons HC, CO and CO₂ resulting from the test on the dynamometric bench relative to the known state of art and according to the invention.

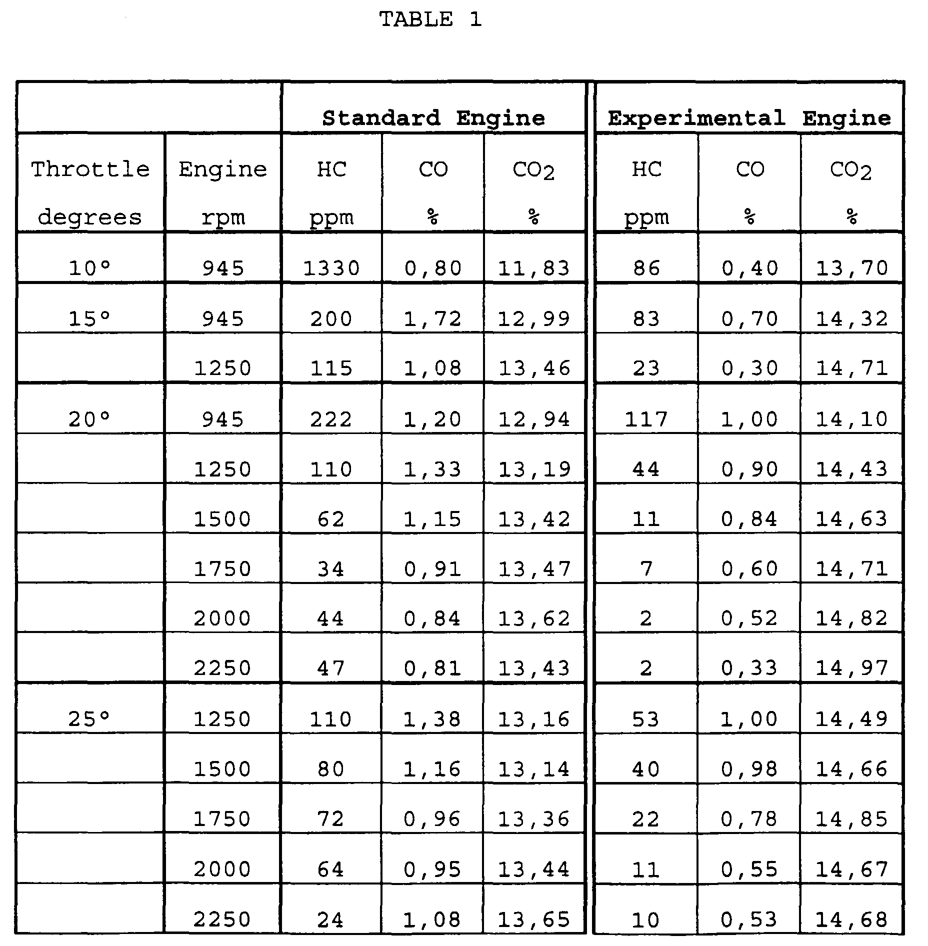

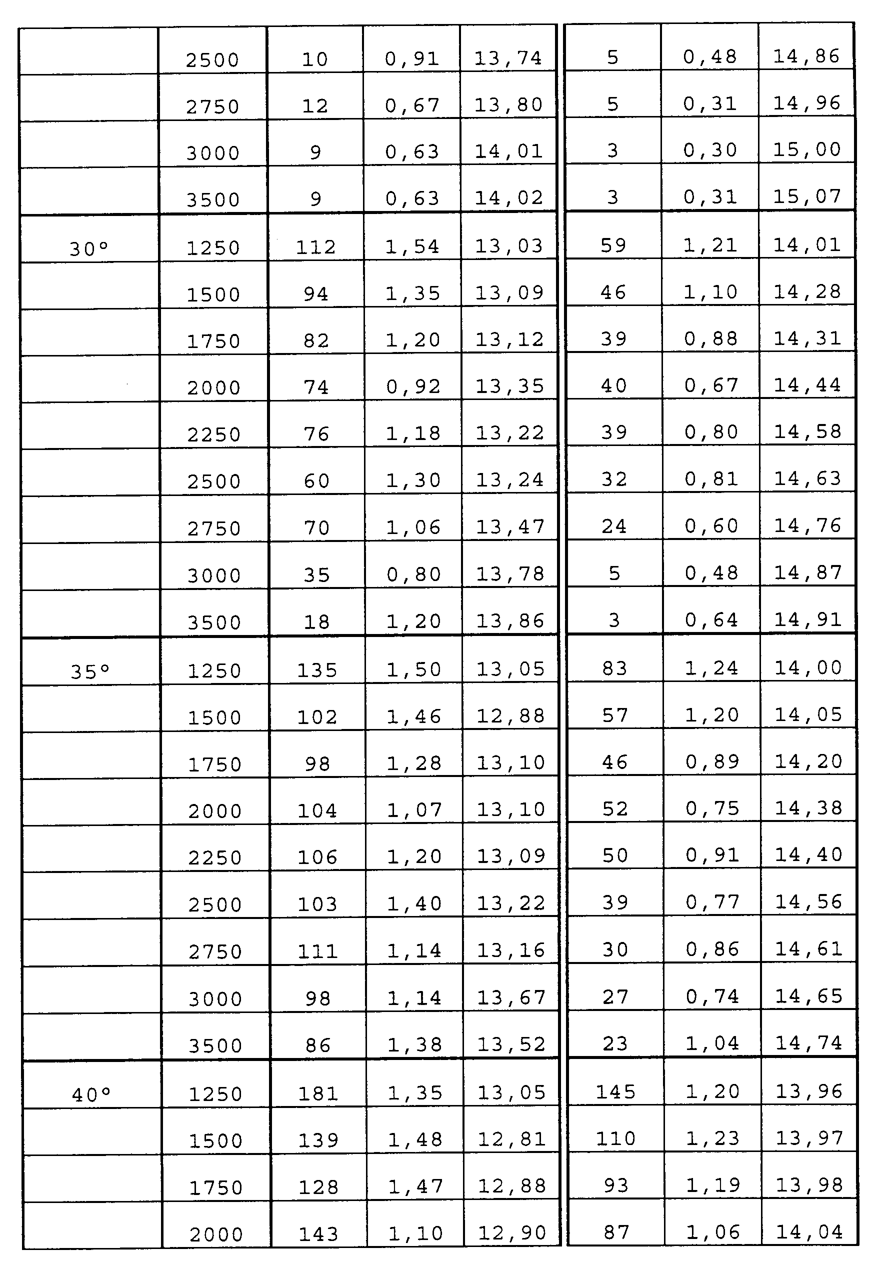

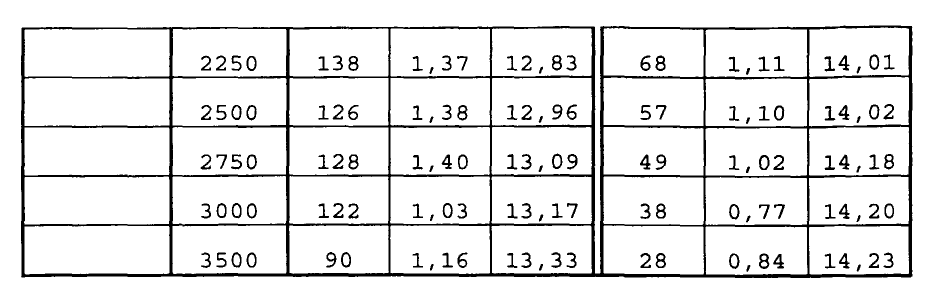

From the lab tests relating to the pollutant emissions, in which a standard engine car was compared with a vehicle equipped with the engine according to the invention, the following results were obtained:
- reduction by 33.7-35.7% of unburnt hydrocarbons (HC)
- reduction by 7.5-11.2% of carbon monoxide (CO)
- reduction by 21.7-27% of nitrogen oxides (NOₓ) Data are more detailed in the following Table 2.

**TABLE 2**

| **Engine No.** | **HC gr/km** | **CO gr/km** | **NOx gr/km** | **HC+NOx gr/km** |
|---|---|---|---|---|
| **22/1 Experimental** | 3,60 | 22,21 | 1,46 | 5,06 |
| **22/1 Experimental** | 3,03 | 20,05 | 1,41 | 4,45 |
| **25/1 Standard** | 5,43 | 24,02 | 1,80 | 7,23 |
| **25/1 Standard** | 4,71 | 22,59 | 2,00 | 6,71 |

| | **PERCENT IMPROVEMENT** | | | |
|---|---|---|---|---|
| | **HC %** | **CO %** | **NOx %** | **HC+NOx %** |
| | 33,7 | 7,5 | 21,7 | 30,0 |
| | 35,0 | 11,2 | 27,0 | 33,7 |

The present invention has positive aspects also from the industrial application viewpoint as the feed system of the invention can be applied with standard technologies to any 5-valve/cylinder engine type by replacing the injector with a single-spray electroinjector 1 (Fig. 3) having a properly reduced spray cone angle so as to inject the fuel only into the duct of the central intake valve as well as by replacing the intake camshaft with another one having a cam controlling the central intake valve suitably delayed with respect to the cams controlling the lateral intake valves.
Finally, the results of the experimental tests are as follows:
- the spray angle of the electroinjector 1 should be between 4° and 12°;
- the geometrical phase angle between the opening angle of the cam controlling the central intake valve V_{asp.C} and that of the cams controlling the lateral intake valves V_{asp.S}, V_{asp.D} should be between 15 and 30 crankshaft degrees;
- the intake valve timings should be as those listed in the following table 3.

**TABLE 3**

| | **Lateral Valves** | **Central Valve** |
|---|---|---|
| **backlash** | 0,3÷0,5 mm | 0,3÷0,5 mm |
| **lift H at TDC** | 1÷2 mm | 0,5÷-0,5 |
| **opening advance** | 60÷30° | 15÷-5° |
| **closing delay** | 40÷65° | 50÷75° |

The present invention has been described and illustrated with reference to a preferred embodiment thereof, however, it should be understood that anyone skilled in the art can make equivalent modifications and/or replacements without departing from the scope of protection of the present industrial invention.

## Claims

1. A feed system for the air-fuel mixture formation and inlet into the combustion chamber of aspirated or supercharged, internal-combustion Otto engines with a 5-valve head per cylinder, characterized by a single-spray electroinjector (1) having such a spray angle and such a direction as to hit only the intake duct of the central intake valve (V_{asp.C}), a timing of the central intake valve (V_{asp.C}) delayed with respect to the lateral intake valves (V_{asp.S}, V_{asp.D}), and an overlap angle between the openings of the intake valves and the exhaust valves (V_{scar.}) which is large in the lateral intake valves (V_{asp.S}, V_{asp.D}) and small or null in the central intake valve (V_{asp.C}).

2. The feed system for internal-combustion Otto engines of claim 1, characterized in that the geometrical phase angle between the opening angle of the cam controlling the central intake valve (V_{asp.C}) and the opening angle of the cams controlling the lateral intake valves (V_{asp.S}, V_{asp.D}) is between 15 and 30 crankshaft degrees.

3. The feed system for internal-combustion Otto engines of the preceding claims, characterized in that the timing of the lateral intake valves (V_{asp.S}, V_{asp.D}) has a backlash between 0.3 and 0.5 mm, a lift H at TDC (top dead centre) between one and two millimetres, an opening advance between 60° and 30°, and a closing delay between 40° and 65°, while the timing of the central intake valve (V_{asp.C}) has a backlash between 0.3 and 0.5 mm, a lift H at TDC between 0.5 and -0.5 mm, an opening advance between 15° and -5°, and a closing delay between 50° and 75°.

4. The feed system for internal-combustion Otto engines of the preceding claims, characterized in that on one hand the performances are improved through the increase of the volumetric efficiency by filling the combustion chamber under all of the engine operating conditions and through the proper use of the aerodynamic inertia of the air column entering the combustion chamber because of the piston depression, and on the other hand the consumption and the pollutant emissions are reduced by letting the fuel into the combustion chamber only through the central intake valve when the exhaust valves are closed in order to decrease the outflow of unburnt fuel into the exhaust system.

5. The feed system for internal-combustion Otto engines of the preceding claims, characterized in that the spray angle of the electroinjector (1) is between 4° and 12°.
